# EUROPEAN PATENT APPLICATION

(11) **EP 4 848 825 A1**
(43) Date of publication of application: **02.12.2026**
(21) Application number: 25744581.7
(22) Date of filing: 21.01.2025
(51) Int. Cl.: H04W 48/02

(54) **CONDITIONAL-RECONFIGURATION EVALUATION METHOD AND APPARATUS, AND TERMINAL AND NETWORK-SIDE DEVICE**

(30) Priority: 23.01.2024 CN 202410098732; 07.02.2024 CN 202410175297
(71) Applicant: Vivo Mobile Communication Co., Ltd., Dongguan, Guangdong 523863 (CN)
(72) Inventor: LIU, Xuanbing, Dongguan, Guangdong 523863 (CN)
(74) Representative: Walaski, Jan Filip
(86) International application number: PCT/CN2025/073719
(87) International publication number: WO 2025/157142

(57) **Abstract**

The present application belongs to the technical field of communications. Disclosed are a conditional-reconfiguration evaluation method and apparatus, and a terminal and a network-side device. The conditional-reconfiguration evaluation method in the embodiments of the present application comprises: during continuous conditional primary secondary cell addition/change (CPAC), a terminal determining that a cell corresponding to a conditional-reconfiguration identifier, which meets a first condition, in a first conditional-configuration variable is a candidate cell suitable for conditional-reconfiguration evaluation, wherein the first conditional-reconfiguration variable is determined on the basis of conditional-reconfiguration information included in a reconfiguration message received by the terminal, and the first condition comprises: the conditional-reconfiguration identifier being included in a continuous CPAC configuration corresponding to the current PSCell.

## Description

### CROSS-REFERENCE TO RELATED APPLICATIONS

The present disclosure claims priority to Chinese Patent Application No. 202410098732.2, filed on January 23, 2024, and to Chinese Patent Application No. 202410175297.9, filed on February 7, 2024, both of which are incorporated herein by reference in their entireties.

### TECHNICAL FIELD

This application pertains to the field of communication technologies, and specifically relates to a conditional-reconfiguration evaluation method and apparatus, a terminal, and a network-side device.

### BACKGROUND

Conditional primary secondary cell addition/change (Conditional Primary Secondary Cell Addition/Change, CPAC) includes conditional primary secondary cell addition (Conditional PSCell Addition, CPA) or conditional primary secondary cell change (Conditional PSCell Change, CPC).

The conditional primary secondary cell addition is primary secondary cell addition performed after user equipment (User Equipment, UE) evaluates an execution condition and the execution condition is met. A CPA configuration includes a configuration and an execution condition of a CPA candidate cell. The execution condition may include one or two trigger conditions.

The conditional primary secondary cell change is a primary secondary cell change performed after the UE evaluates an execution condition and the execution condition is met. The UE starts to evaluate the execution condition after receiving a CPC configuration. The UE stops evaluating the execution condition after the primary secondary cell change is triggered. The CPC configuration includes a configuration and an execution condition of a CPC candidate cell. The execution condition may include one or two trigger conditions. Once a primary secondary cell change process is successfully completed, the UE releases all stored CPC configurations.

The CPC includes a variety of scenarios, such as:
- intra-secondary-node conditional primary secondary cell change (Intra-SN CPC);
- master node initiated inter-secondary-node conditional primary secondary cell change (MN initiated Inter-SN CPC); and
- secondary node initiated inter-secondary-node conditional primary secondary cell change (SN initiated Inter-SN CPC).

A network configures the CPAC, and supports the UE in performing a subsequent CPAC procedure. In the subsequent CPAC procedure, the network does not need to perform a reconfiguration.

In the subsequent CPAC procedure, conditional reconfigurations of candidate cells are retained. In this case, a conditional reconfiguration of each candidate cell may be associated with at least one execution condition. However, these execution conditions may be defined for different scenarios, that is, the candidate cell may not be a candidate cell of a current primary secondary cell (Primary Secondary Cell, PSCell). If all these candidate cells are evaluated directly under the current PSCell, misuse of these execution conditions occurs, which leads to erroneous evaluation results.

### SUMMARY

Embodiments of this application provide a conditional-reconfiguration evaluation method and apparatus, and a terminal, to resolve a problem in a related art that directly evaluating all candidate cells corresponding to retained conditional reconfigurations under a current PSCell causes misuse of execution conditions and further causes erroneous evaluation results.

According to a first aspect, a conditional-reconfiguration evaluation method is provided and includes:
in a subsequent conditional primary secondary cell addition/change CPAC procedure, determining, by a terminal, a cell corresponding to a conditional-reconfiguration identifier that is in a first conditional-reconfiguration variable and that meets a first condition, as an applicable candidate cell in conditional-reconfiguration evaluation, where
the first conditional-reconfiguration variable is determined based on conditional-reconfiguration information included in a reconfiguration message received by the terminal; and the first condition includes: the conditional-reconfiguration identifier is included in a subsequent CPAC configuration corresponding to a current PSCell.

According to a second aspect, a conditional-reconfiguration method is provided and includes:
sending, by a network-side device, a reconfiguration message to a terminal, where the reconfiguration message includes conditional-reconfiguration information, and the conditional-reconfiguration information includes a subsequent CPAC configuration corresponding to at least one candidate cell, where
in a case that a target candidate cell is used as a primary secondary cell PSCell, a candidate cell corresponding to a conditional-reconfiguration identifier included in a subsequent CPAC configuration corresponding to the target candidate cell is an applicable candidate cell in conditional-reconfiguration evaluation.

According to a third aspect, a conditional-reconfiguration evaluation apparatus is provided and applied to a terminal. The apparatus includes:
a first evaluation module, configured to determine a cell corresponding to a conditional-reconfiguration identifier that is in a first conditional-reconfiguration variable and that meets a first condition, as an applicable candidate cell in conditional-reconfiguration evaluation in a subsequent conditional primary secondary cell addition/change CPAC procedure, where
the first conditional-reconfiguration variable is determined based on conditional-reconfiguration information included in a reconfiguration message received by the terminal; and the first condition includes: the conditional-reconfiguration identifier is included in a subsequent CPAC configuration corresponding to a current PSCell.

According to a fourth aspect, a conditional-reconfiguration apparatus is provided and includes:
a reconfiguration sending module, configured to send a reconfiguration message to a terminal, where the reconfiguration message includes conditional-reconfiguration information, and the conditional-reconfiguration information includes a subsequent CPAC configuration corresponding to at least one candidate cell, where
in a case that a target candidate cell is used as a primary secondary cell PSCell, a candidate cell corresponding to a conditional-reconfiguration identifier included in a subsequent CPAC configuration corresponding to the target candidate cell is an applicable candidate cell in conditional-reconfiguration evaluation.

According to a fifth aspect, a terminal is provided. The terminal includes a processor and a memory. The memory stores a program or instructions capable of running on the processor. When the program or the instructions are executed by the processor, the steps of the method according to the first aspect are implemented.

According to a sixth aspect, a terminal is provided and includes a processor and a communication interface. The communication interface is configured to receive a reconfiguration message, and the processor is configured to determine a cell corresponding to a conditional-reconfiguration identifier that is in a first conditional-configuration variable and that meets a first condition, as an applicable candidate cell in conditional-reconfiguration evaluation in a subsequent conditional primary secondary cell addition/change CPAC procedure, where the first conditional-reconfiguration variable is determined based on conditional-reconfiguration information included in the reconfiguration message received by the terminal; and the first condition includes: the conditional-reconfiguration identifier is included in a subsequent CPAC configuration corresponding to a current PSCell.

According to a seventh aspect, a network-side device is provided. The network-side device includes a processor and a memory. The memory stores a program or instructions capable of running on the processor. When the program or the instructions are executed by the processor, the steps of the method according to the second aspect are implemented.

According to an eighth aspect, a network-side device is provided and includes a processor and a communication interface. The communication interface is configured to send a reconfiguration message to a terminal, where the reconfiguration message includes conditional-reconfiguration information, and the conditional-reconfiguration information includes a subsequent CPAC configuration corresponding to at least one candidate cell, where
in a case that a target candidate cell is used as a primary secondary cell PSCell, a candidate cell corresponding to a conditional-reconfiguration identifier included in a subsequent CPAC configuration corresponding to the target candidate cell is an applicable candidate cell in conditional-reconfiguration evaluation.

According to a ninth aspect, a readable storage medium is provided. The readable storage medium stores a program or instructions. When the program or the instructions are executed by a processor, the steps of the method according to the first aspect are implemented, or the steps of the method according to the second aspect are implemented.

According to a tenth aspect, a wireless communication system is provided and includes a terminal and a network-side device. The terminal may be configured to perform the steps of the method according to the first aspect. The network-side device may be configured to perform the steps of the method according to the second aspect.

According to an eleventh aspect, a chip is provided. The chip includes a processor and a communication interface. The communication interface is coupled to the processor. The processor is configured to run a program or instructions to implement the method according to the first aspect or implement the method according to the second aspect.

According to a twelfth aspect, a computer program or program product is provided. The computer program or program product is stored in a storage medium. The program or program product is executed by at least one processor to implement the steps of the method according to the first aspect or implement the steps of the method according to the second aspect.

In the embodiments of this application, in conditional-reconfiguration evaluation in which the subsequent CPAC procedure is configured, the applicable candidate cell is the cell corresponding to the conditional-reconfiguration identifier included in the subsequent CPAC configuration corresponding to the current PSCell. The method can exclude other inapplicable non-candidate cells, thereby avoiding directly evaluating all these candidate cells under the current PSCell, and further avoiding erroneous evaluation results caused by evaluating incorrect candidate cells.

### BRIEF DESCRIPTION OF DRAWINGS

FIG. 1 is a block diagram of a wireless communication system to which an embodiment of this application can be applied;
FIG. 2 is a schematic diagram illustrating a step of a conditional-reconfiguration evaluation method according to an embodiment of this application;
FIG. 3 is a schematic diagram illustrating a step of a conditional-reconfiguration method according to an embodiment of this application;
FIG. 4 is a schematic diagram of a structure of a conditional-reconfiguration evaluation apparatus according to an embodiment of this application;
FIG. 5 is a schematic diagram of a structure of a conditional-reconfiguration apparatus according to an embodiment of this application;
FIG. 6 is a schematic diagram of a structure of a communication device according to an embodiment of this application;
FIG. 7 is a schematic diagram of a structure of a terminal according to an embodiment of this application; and
FIG. 8 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "or" in this application indicates at least one of connected objects. For example, "A or B" covers three schemes, that is, scheme 1: including A and excluding B; scheme 2: including B and excluding A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as follows: A sender explicitly notifies a receiver, in a sent indication, of content such as specific information, an operation to be performed, or a result being requested. The indirect indication may be understood as follows: A receiver determines corresponding information based on an indication sent by a sender, or makes a decision and determines, based on a decision result, an operation to be performed or a result being requested, or the like.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or other systems. The terms "system" and "network" in the embodiments of this application are usually used interchangeably. The described technologies may be used for the foregoing systems and radio technologies, and may also be used for other systems and radio technologies. However, in the following descriptions, a new radio (New Radio, NR) system is described for an illustrative purpose, and NR terms are used in most of the following descriptions. These technologies may also be applied to other systems than the NR system, for example, a 6th Generation (6^{th} Generation, 6G) communication system.

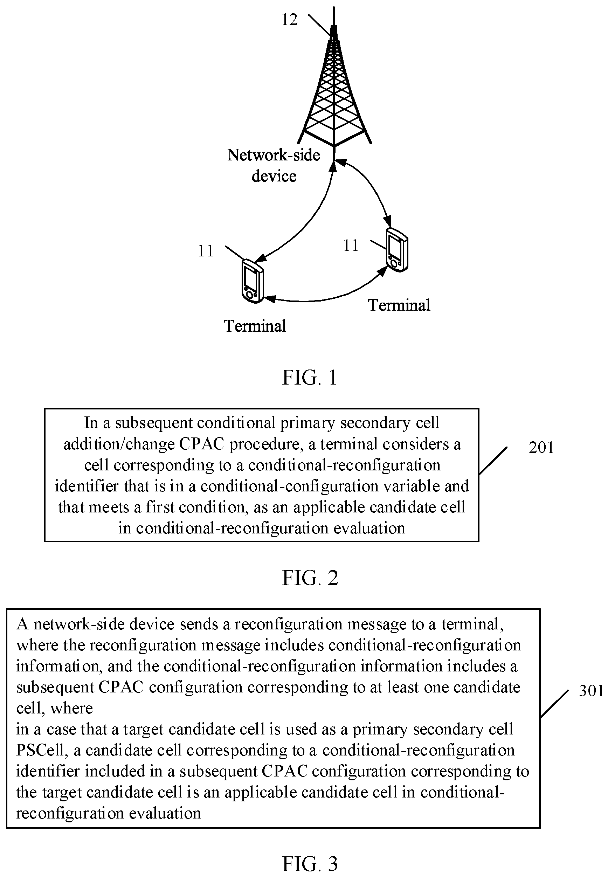

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network-side device 12 may include an access network device or a core network device. The access network device may also be referred to as a radio access network (Radio Access Network, RAN) device, a radio access network function, or a radio access network element. The access network device may include a base station, a wireless local area network (Wireless Local Area Network, WLAN) access point (Access Point, AS), a wireless fidelity (Wireless Fidelity, Wi-Fi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

A conditional-reconfiguration evaluation method provided in the embodiments of this application is hereinafter described in detail by using some embodiments and application scenarios thereof with reference to the accompanying drawings.

As shown in FIG. 2, an embodiment of this application provides a conditional-reconfiguration evaluation method, including:
Step 201: In a subsequent conditional primary secondary cell addition/change CPAC procedure, a terminal determines a cell corresponding to a conditional-reconfiguration identifier that is in a first conditional-reconfiguration variable and that meets a first condition, as an applicable candidate cell in conditional-reconfiguration evaluation, where
the first conditional-reconfiguration variable is determined based on conditional-reconfiguration information included in a reconfiguration message received by the terminal; and the first condition includes: the conditional-reconfiguration identifier is included in a subsequent CPAC configuration corresponding to a current PSCell.

Optionally, a subsequent CPAC configuration is configuration information that is configured by a network-side device for the terminal and that is applicable to the subsequent CPAC procedure. The subsequent CPAC configuration includes at least one conditional-reconfiguration identifier and an execution condition associated with the conditional-reconfiguration identifier. A conditional-reconfiguration identifier is used to uniquely identify one conditional reconfiguration.

Optionally, the conditional-reconfiguration evaluation includes: evaluating an applicable candidate cell, and specifically, evaluating whether the candidate cell can be used as a target cell for the CPAC.

Optionally, the terminal receives a reconfiguration message (such as a radio resource control RRC reconfiguration message), where the reconfiguration message includes conditional-reconfiguration information, for example, a subsequent CPAC configuration, and at least one of the following conditional reconfigurations:
an RRC configuration of a candidate cell, including a conditional-reconfiguration identifier condReconfigId, a conditional RRC configuration condRRCReconfig, and the like; and
a subsequent CPAC configuration provided by a candidate cell, including: when a conditional RRC configuration of the candidate cell is applied (it may be understood that the candidate cell is used as a serving primary secondary cell), a subsequent CPAC execution condition used for conditional evaluation of at least one other candidate cell and a conditional-reconfiguration identifier condReconfigId associated with the subsequent CPAC execution condition. The condReconfigId corresponds to one other candidate cell.

For example, a subsequent CPAC configuration initiated by a master node MN includes an initial CPAC configuration and a subsequent CPAC configuration. Candidate cells (candidate cells) include a cell 1, a cell 2, and a cell 3.

The initial CPAC configuration (refer to a first execution condition condExecutionCond) includes the candidate cells cell 1, cell 2, and cell 3.

In the subsequent CPAC configuration (refer to subsequentCondReconfig),
when the cell 1 is the PSCell, the candidate cells include the cell 1 and the cell 2;
when the cell 2 is the PSCell, the candidate cell includes the cell 3; or
when the cell 3 is the PSCell, the candidate cell includes the cell 2.

In an optional embodiment of this application, a CPAC procedure of a subsequent conditional reconfiguration may include an initial CPAC procedure and a subsequent CPAC procedure. After an initial CPAC is performed, the subsequent CPAC procedure is entered. The initial CPAC procedure is also referred to as an initial CPAC phase. The subsequent CPAC procedure is also referred to as a subsequent CPAC phase.

The conditional-reconfiguration evaluation method provided in this embodiment of this application can be used in all CPAC phases, including the initial CPAC phase and the subsequent CPAC phase.

In another optional implementation, the first conditional-reconfiguration variable meets at least one of the following conditions:
the first conditional-reconfiguration variable includes a subsequent CPAC configuration; and
in the first conditional-reconfiguration variable, a conditional-reconfiguration entry corresponding to the current primary secondary cell PSCell includes a subsequent CPAC configuration.

It should be noted that the current PSCell may be understood as a PSCell to which the terminal is currently connected, or a PSCell added or changed in a previous CPAC procedure. This is not specifically limited herein.

In other words, in the subsequent CPAC procedure, for each conditional-reconfiguration identifier condReconfigId included in the conditional-reconfiguration variable VarConditionalReconfig, if the first condition is met, a cell corresponding to the conditional-reconfiguration identifier is considered as an applicable candidate cell in the conditional-reconfiguration evaluation.

Alternatively, for each conditional-reconfiguration identifier condReconfigId included in the conditional-reconfiguration variable VarConditionalReconfig, in the subsequent CPAC procedure, if the first condition is not met - for example, the conditional-reconfiguration identifier is not included in the subsequent CPAC configuration corresponding to the PSCell - a cell corresponding to the conditional-reconfiguration identifier is considered as a cell not used in the conditional-reconfiguration evaluation, or a cell corresponding to the conditional-reconfiguration identifier is not considered as an applicable candidate cell in the conditional-reconfiguration evaluation, or the cell is excluded from consideration.

In conclusion, in this embodiment of this application, in the conditional-reconfiguration evaluation in the subsequent CPAC phase, an applicable candidate cell is a cell corresponding to a conditional-reconfiguration identifier included in a subsequent conditional reconfiguration of the PSCell, and other inapplicable non-candidate cells are excluded.

It may be understood that, for subsequent CPAC evaluation, the foregoing conditional-reconfiguration evaluation method is to determine whether a candidate cell is applicable to the current PSCell.

In the subsequent CPAC phase, the first condition is used to determine whether the candidate cell is applicable to the current PSCell, that is, a conditional-reconfiguration identifier corresponding to the candidate cell is included in the subsequent CPAC configuration SubsequentCondReconfig corresponding to the PSCell.

For example, when the cell 2 becomes the PSCell, the applicable candidate cell includes the cell 3, that is, a subsequent CPAC configuration SubsequentCondReconfig corresponding to the cell 2 includes a conditional-reconfiguration identifier condReconfigId corresponding to the candidate cell cell 3. Without loss of generality, a value of the condReconfigId corresponding to the cell 3 is a third conditional-reconfiguration identifier value.

In at least one embodiment of this application, the method further includes:
in an initial CPAC procedure or in a CPAC procedure in which no subsequent reconfiguration is configured, the terminal determines a cell corresponding to a conditional-reconfiguration identifier that is in a second conditional-reconfiguration variable and that meets a second condition, as an applicable candidate cell in the conditional-reconfiguration evaluation.

Optionally, the second condition includes at least one of the following:
the conditional-reconfiguration identifier is not included in the subsequent CPAC configuration corresponding to the PSCell; and
a conditional-reconfiguration variable entry corresponding to the conditional-reconfiguration identifier includes an initial CPAC configuration.

Optionally, the second conditional-reconfiguration variable meets at least one of the following conditions:
the second conditional-reconfiguration variable does not include a subsequent CPAC configuration; and
in the second conditional-reconfiguration variable, a conditional-reconfiguration entry corresponding to the current PSCell does not include a subsequent CPAC configuration.

In other words, in the initial CPAC procedure or in the CPAC procedure in which no subsequent reconfiguration is configured, for each conditional-reconfiguration identifier condReconfigId included in the conditional-reconfiguration variable VarConditionalReconfig, if the second condition is met, a cell corresponding to the conditional-reconfiguration identifier is considered as an applicable candidate cell in the conditional-reconfiguration evaluation.

Alternatively, for each conditional-reconfiguration identifier condReconfigId included in the conditional-reconfiguration variable VarConditionalReconfig, in the initial CPAC procedure, if the second condition is not met - for example, in the conditional-reconfiguration variable, the conditional-reconfiguration entry corresponding to the primary secondary cell PSCell includes the subsequent CPAC configuration, a candidate cell to be evaluated is not determined based on the subsequent CPAC configuration.

Alternatively, for each conditional-reconfiguration identifier condReconfigId included in the conditional-reconfiguration variable VarConditionalReconfig, in the initial CPAC procedure, if the second condition is not met - for example, the conditional-reconfiguration variable entry corresponding to the conditional-reconfiguration identifier does not include the initial CPAC configuration - a cell corresponding to the conditional-reconfiguration identifier is not considered as an applicable candidate cell in the conditional-reconfiguration evaluation, or the cell is excluded from consideration.

In conclusion, in this embodiment of this application, in the conditional-reconfiguration evaluation in the initial CPAC phase or in the CPAC phase in which no subsequent reconfiguration is configured, an applicable candidate cell is a cell corresponding to a conditional-reconfiguration entry that is in a subsequent conditional reconfiguration and that includes the initial CPAC configuration, and other inapplicable non-candidate cells are excluded.

It may be understood that, for the initial CPAC procedure in which a subsequent conditional reconfiguration is configured or the CPAC procedure in which no subsequent conditional reconfiguration is configured, the second condition is used to determine whether a candidate cell is applicable to the current PSCell.

It should be noted that "determining" mentioned in this embodiment of this application may also be understood as "considering", "expecting", "judging", or the like. This is not specifically limited.

After at least one execution condition is met, the terminal performs the CPAC. An example is as follows:
(1) In the initial CPAC phase, the second condition is used to determine that the conditional-reconfiguration variable VarConditionalReconfig includes three conditional-reconfiguration entries, which respectively include conditional-reconfiguration identifiers corresponding to the cell 1, cell 2, and cell 3, and execution conditions thereof. Therefore, the cell 1, cell 2, and cell 3 are applicable candidate cells.
(2) After the execution condition condExecutionCond of the cell 1 is met, the terminal performs CPA, and the cell 1 is the PSCell. Without loss of generality, a condExecutionCond value of the cell 1 is a value measId1.
(3) The terminal enters a subsequent CPC phase, including evaluation and execution of a subsequent CPC.
   For example, based on the first condition, it is determined that the subsequentCondReconfig included in the conditional reconfiguration corresponding to the cell 1 includes the candidate cell cell 2 corresponding to a condReconfigId whose value is a second conditional-reconfiguration identifier value, and the cell 3 corresponding to a CondReconfigId whose value is 3. Therefore, the cell 2 and cell 3 are applicable candidate cells.
(4) After conditional-reconfiguration evaluation of the subsequent CPC, an execution condition condExecutionCondSCG of the cell 2 is met. The terminal performs the CPC to switch the PSCell to the cell 2.

Based on the first condition, it is determined that the subsequentCondReconfig included in the conditional reconfiguration corresponding to the cell 2 includes the candidate cell cell 3 corresponding to a condReconfigId whose value is the third conditional-reconfiguration identifier value. Therefore, the cell 3 is an applicable candidate cell.

When the subsequent CPAC is configured, the CPAC procedure of the subsequent conditional reconfiguration may include the initial CPAC phase and the subsequent CPAC phase. After the initial CPAC is performed, the subsequent CPAC phase is entered. In different phases, a method for determining an applicable candidate cell in this embodiment of this application varies. Therefore, it is necessary to determine whether the current phase is the initial CPAC or the subsequent CPAC, so as to assist in determining a suitable candidate cell.

In an optional embodiment of this application, the method further includes:
in a case that a third condition is met, determining that the terminal is in the subsequent CPAC procedure, where the third condition includes at least one of the following:
the subsequent CPAC configuration is applied;
the subsequent CPAC configuration corresponding to the current PSCell is applied; and
a value of a first variable used to indicate whether the terminal is in the subsequent CPAC procedure is a first value, and the first value is used to indicate that the terminal is in the subsequent CPAC procedure.

Optionally, the first variable may also be understood as being used to indicate whether the subsequent CPAC configuration is applied; and the first value correspondingly indicates that the subsequent CPAC configuration is applied.

In another optional embodiment of this application, the method further includes:
in a case that a fourth condition is met, determining that the terminal is in the initial CPAC procedure, where the fourth condition includes at least one of the following:
the subsequent CPAC configuration is not applied;
the subsequent CPAC configuration corresponding to the current PSCell is not applied; and
a value of a first variable used to indicate whether the terminal is in the subsequent CPAC procedure is a second value, and the second value is used to indicate that the terminal is not in the subsequent CPAC procedure.

Optionally, the first variable may also be understood as being used to indicate whether the subsequent CPAC configuration is applied; and the second value correspondingly indicates that the subsequent CPAC configuration is not applied.

The subsequent CPAC configuration corresponding to the PSCell is included in a conditional reconfiguration entry corresponding to the PSCell (the entry of PSCell in VarConditionalReconfig).

Optionally, the first variable is included in the conditional-reconfiguration variable.

In an optional embodiment, the method further includes:
in a case that a fifth condition is met, determining that the value of the first variable is the first value, where the fifth condition includes at least one of the following:
the initial CPAC is performed;
an execution condition of the candidate cell is updated to a subsequent execution condition; and
the value of the first variable is configured by a network as the first value.

In another optional embodiment, the method further includes:
in a case that a sixth condition is met, determining that the value of the first variable is the second value, where the sixth condition includes at least one of the following:
the value of the first variable is initialized to the second value;
the subsequent CPAC configuration is initially received;
no subsequent conditional reconfiguration (subsequentCondReconfig) is configured;
no key configuration (sk-CounterConfiguration) is configured;
the subsequent CPAC configuration is released;
the value of the first variable is configured by a network as the second value;
no key such as sk-Counter is available;
a secondary cell group SCG is released;
a radio resource control RRC connection is released; and
the conditional-reconfiguration variable is released.

In an implementation,
the first variable is S-CPAC-start;
the first value is TRUE, and the second value is FALSE; and
the variable VarConditionalReconfig includes S-CPAC-start.

For example, an implementation is as follows:
1> For each conditional-reconfiguration identifier (condReconfigId) in the conditional-reconfiguration variable (VarConditionalReconfig):
   2> if an RRC reconfiguration in a conditional RRC reconfiguration (condRRCReconfig) includes a secondary cell group SCG, and the secondary cell group includes a subsequent reconfiguration:
      3> if a subsequent conditional reconfiguration (subsequentCondReconfig) is included in an entry in VarConditionalReconfig, and if condReconfigId is included in condExecutionCondToAddModList within subsequentCondReconfig, and if subsequentCondReconfig is applied; or
      3> if a subsequent conditional reconfiguration (subsequentCondReconfig) is included in an entry in VarConditionalReconfig, and subsequentCondReconfig is not applied; or
      3> if a subsequent conditional reconfiguration (subsequentCondReconfig) is not included in an entry in VarConditionalReconfig,
         4> if a cell having a physical cell identifier matching a value indicated in ServingCellConfigCommon in a reconfiguration with synchronization (reconfigurationWithSync) in the secondary cell group included in the received condRRCReconfig is not the PSCell:
            5> consider the cell as an applicable cell.

In at least one embodiment of this application, the method further includes:
replacing an execution condition included in the first conditional-reconfiguration variable with an execution condition corresponding to the conditional-reconfiguration identifier that meets the first condition.

In an implementation, in a case that an RRC reconfiguration message (RRCReconfiguration message) included in the first conditional-reconfiguration variable is applied due to conditional-reconfiguration execution, and that the first conditional-reconfiguration variable includes a subsequent CPAC configuration (subsequentCondReconfig), the terminal performs a first operation, where the first operation includes at least one of the following:
before the execution condition included in the first conditional-reconfiguration variable is replaced with the execution condition corresponding to the conditional-reconfiguration identifier that meets the first condition, deleting execution conditions corresponding to all conditional-reconfiguration identifiers in the first conditional-reconfiguration variable; and
after the execution condition included in the first conditional-reconfiguration variable is replaced with the execution condition corresponding to the conditional-reconfiguration identifier that meets the first condition, deleting an execution condition that is not replaced.

In an optional embodiment, if the subsequent CPAC configuration is a secondary node initiated inter-secondary-node subsequent CPAC (SN initiated inter-SN subsequent CPAC) configuration or a master node initiated inter-secondary-node subsequent CPAC (MN initiated inter-SN subsequent CPAC) configuration, the deleted execution condition is an SCG execution condition condExecutionCondSCG;
or
if the subsequent CPAC configuration is a secondary node initiated intra-secondary-node subsequent CPAC with master node involvement (SN initiated intra-SN subsequent CPAC with MN involvement) configuration, the deleted execution condition is an execution condition condExecutionCond.

For example, an implementation is as follows:
2> If an RRC reconfiguration message (RRCReconfiguration message) is applied due to conditional-reconfiguration execution, and a subsequent CPAC configuration (subsequentCondReconfig) is included in an entry including the RRC reconfiguration message in the first conditional-reconfiguration variable:
   3> for each conditional-reconfiguration identifier included in condExecutionCondToAddModList in the subsequent CPAC configuration:
      4> replace condExecutionCond or condExecutionConditSCG in an entry corresponding to a matching conditional-reconfiguration identifier value in the first conditional-reconfiguration variable;
   3> in the first conditional-reconfiguration variable, delete condExecutionCond or condExecutionConditSCG in an entry that does not match a conditional-reconfiguration identifier value included in condExecutionCondToAddModList in the subsequent CPAC configuration, or delete an execution condition that is not replaced.

Alternatively, another implementation is as follows:
2> If an RRC reconfiguration message (RRCReconfiguration message) is applied due to conditional-reconfiguration execution, and a subsequent CPAC configuration (subsequentCondReconfig) is included in an entry including the RRC reconfiguration message in the first conditional-reconfiguration variable:
2> in the first conditional-reconfiguration variable, delete an execution condition condExecutionCond or condExecutionConditSCG that is in all entries and that is used for the subsequent CPAC, or delete an execution condition condExecutionCond or condExecutionConditSCG that corresponds to all conditional-reconfiguration identifiers and that is used for the subsequent CPAC;
   3> for each conditional-reconfiguration identifier included in condExecutionCondToAddModList in the subsequent CPAC configuration:
      4> replace condExecutionCond or condExecutionConditSCG in an entry corresponding to a matching conditional-reconfiguration identifier value in the conditional-reconfiguration variable.

In conclusion, in this embodiment of this application, in conditional-reconfiguration evaluation in the subsequent CPAC phase, the applicable candidate cell is the cell corresponding to the conditional-reconfiguration identifier included in the subsequent conditional reconfiguration of the PSCell. The method can exclude other inapplicable non-candidate cells, thereby avoiding directly evaluating all these candidate cells under the current PSCell, and further avoiding erroneous evaluation results caused by evaluating incorrect candidate cells.

As shown in FIG. 3, an embodiment of this application further provides a conditional-reconfiguration method, including:

Step 301: A network-side device sends a reconfiguration message to a terminal, where the reconfiguration message includes conditional-reconfiguration information, and the conditional-reconfiguration information includes a subsequent CPAC configuration corresponding to at least one candidate cell, where
in a case that a target candidate cell is used as a primary secondary cell PSCell, a candidate cell corresponding to a conditional-reconfiguration identifier included in a subsequent CPAC configuration corresponding to the target candidate cell is an applicable candidate cell in conditional-reconfiguration evaluation.

Optionally, the network-side device sends a reconfiguration message (such as a radio resource control RRC reconfiguration message), where the reconfiguration message includes conditional-reconfiguration information, for example, a subsequent CPAC configuration, and at least one of the following conditional reconfigurations:
an RRC configuration of a candidate cell, including a conditional-reconfiguration identifier condReconfigId, a conditional RRC configuration condRRCReconfig, and the like; and
a subsequent CPAC configuration provided by a candidate cell, including: when a conditional RRC configuration of the candidate cell is applied (it may be understood that the candidate cell is used as a serving primary secondary cell), a subsequent CPAC execution condition used for conditional evaluation of at least one other candidate cell and a conditional-reconfiguration identifier condReconfigId associated with the subsequent CPAC execution condition. The condReconfigId corresponds to one other candidate cell.

For example, a subsequent CPAC configuration initiated by a master node MN includes an initial CPAC configuration and a subsequent CPAC configuration. Candidate cells (candidate cells) include a cell 1, a cell 2, and a cell 3.

The initial CPAC configuration (refer to a first execution condition condExecutionCond) includes the candidate cells cell 1, cell 2, and cell 3.

In the subsequent CPAC configuration (refer to subsequentCondReconfig),
when the cell 1 is the PSCell, the candidate cells include the cell 1 and the cell 2;
when the cell 2 is the PSCell, the candidate cell includes the cell 3; or
when the cell 3 is the PSCell, the candidate cell includes the cell 2.

In an optional embodiment, in a subsequent CPAC procedure, in the case that the target candidate cell is used as the primary secondary cell PSCell, the candidate cell corresponding to the conditional-reconfiguration identifier included in the subsequent CPAC configuration corresponding to the target candidate cell is the applicable candidate cell in the conditional-reconfiguration evaluation.

In an optional embodiment of this application, a CPAC procedure of a subsequent conditional reconfiguration may include an initial CPAC procedure and a subsequent CPAC procedure. After an initial CPAC is performed, the subsequent CPAC procedure is entered. The initial CPAC procedure is also referred to as an initial CPAC phase. The subsequent CPAC procedure is also referred to as a subsequent CPAC phase.

In other words, in the subsequent CPAC procedure, for each conditional-reconfiguration identifier condReconfigId included in a conditional-reconfiguration entry, if the conditional-reconfiguration identifier is included in a subsequent CPAC configuration corresponding to the PSCell, a cell corresponding to the conditional-reconfiguration identifier is considered as an applicable candidate cell in the conditional-reconfiguration evaluation.

In at least one optional embodiment of this application, the conditional-reconfiguration information further includes a first variable, and the first variable is used to indicate whether the terminal is in the subsequent CPAC procedure, where
in a case that a value of the first variable is a first value, the first value is used to indicate that the terminal is in the subsequent CPAC procedure; or
in a case that a value of the first variable is a second value, the second value is used to indicate that the terminal is not in the subsequent CPAC procedure.

In an optional embodiment, the method further includes:
in a case that a seventh condition is met, determining that the value of the first variable is the first value, where the seventh condition includes at least one of the following:
the initial CPAC is performed; and
an execution condition of the candidate cell is updated to a subsequent execution condition.

In another optional embodiment, the method further includes:
in a case that an eighth condition is met, determining that the value of the first variable is the second value, where the eighth condition includes at least one of the following:
the value of the first variable is initialized to the second value;
the subsequent CPAC configuration is initially received;
no subsequent conditional reconfiguration (subsequentCondReconfig) is configured;
no key configuration (sk-CounterConfiguration) is configured;
the subsequent CPAC configuration is released;
no key such as sk-Counter is available;
a secondary cell group SCG is released;
a radio resource control RRC connection is released; and
the conditional-reconfiguration variable is released.

In an implementation,
the first variable is S-CPAC-start; and
the first value is TRUE, and the second value is FALSE.

In conclusion, in this embodiment of this application, in conditional-reconfiguration evaluation in the subsequent CPAC phase, an applicable candidate cell is a cell corresponding to a conditional-reconfiguration identifier included in a subsequent conditional reconfiguration of the PSCell. The method can assist the terminal in excluding other inapplicable non-candidate cells, thereby avoiding directly evaluating all these candidate cells under the current PSCell, and further avoiding erroneous evaluation results caused by evaluating incorrect candidate cells.

The conditional-reconfiguration evaluation method or the conditional-reconfiguration method provided in the embodiments of this application may be performed by a conditional-reconfiguration evaluation apparatus or a conditional-reconfiguration apparatus. A conditional-reconfiguration evaluation apparatus or a conditional-reconfiguration apparatus provided in the embodiments of this application is described by using an example in which the conditional-reconfiguration evaluation apparatus or the conditional-reconfiguration apparatus performs the conditional-reconfiguration evaluation method or the conditional-reconfiguration method in the embodiments of this application.

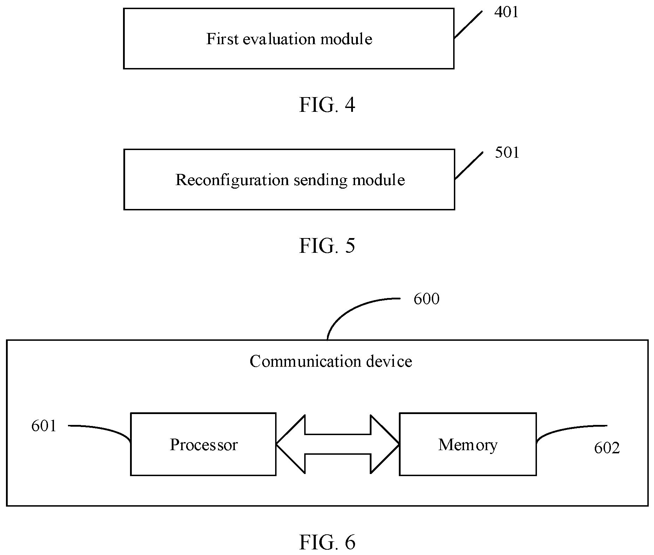

As shown in FIG. 4, an embodiment of this application further provides a conditional-reconfiguration evaluation apparatus. The apparatus is applied to a terminal and includes:
a first evaluation module 301, configured to determine a cell corresponding to a conditional-reconfiguration identifier that is in a first conditional-configuration variable and that meets a first condition, as an applicable candidate cell in conditional-reconfiguration evaluation in a subsequent conditional primary secondary cell addition/change CPAC procedure, where
the first conditional-reconfiguration variable is determined based on conditional-reconfiguration information included in a reconfiguration message received by the terminal; and the first condition includes: the conditional-reconfiguration identifier is included in a subsequent CPAC configuration corresponding to a current PSCell.

In an optional embodiment, the first conditional-reconfiguration variable meets at least one of the following conditions:
the first conditional-reconfiguration variable includes a subsequent CPAC configuration; and
in the first conditional-reconfiguration variable, a conditional-reconfiguration entry corresponding to the current primary secondary cell PSCell includes a subsequent CPAC configuration.

In an optional embodiment, the apparatus further includes:
a first evaluation module, configured to determine a cell corresponding to a conditional-reconfiguration identifier that is in a second conditional-reconfiguration variable and that meets a second condition, as an applicable candidate cell in the conditional-reconfiguration evaluation in an initial CPAC procedure or in a CPAC procedure in which no subsequent reconfiguration is configured, where the second condition includes at least one of the following:
the conditional-reconfiguration identifier is not included in the subsequent CPAC configuration corresponding to the current PSCell; and
a conditional-reconfiguration variable entry corresponding to the conditional-reconfiguration identifier includes an initial CPAC configuration.

In an optional embodiment, the second conditional-reconfiguration variable meets at least one of the following conditions:
the second conditional-reconfiguration variable does not include a subsequent CPAC configuration; and
in the second conditional-reconfiguration variable, a conditional-reconfiguration entry corresponding to the current PSCell does not include a subsequent CPAC configuration.

In an optional embodiment, the apparatus further includes:
a first determining module, configured to determine that the terminal is in the subsequent CPAC procedure in a case that a third condition is met, where the third condition includes at least one of the following:
the subsequent CPAC configuration is applied;
the subsequent CPAC configuration corresponding to the current PSCell is applied; and
a value of a first variable used to indicate whether the terminal is in the subsequent CPAC procedure is a first value, and the first value is used to indicate that the terminal is in the subsequent CPAC procedure.

In an optional embodiment, the apparatus further includes:
a second determining module, configured to determine that the terminal is in the initial CPAC procedure in a case that a fourth condition is met, where the fourth condition includes at least one of the following:
the subsequent CPAC configuration is not applied;
the subsequent CPAC configuration corresponding to the current PSCell is not applied; and
a value of a first variable used to indicate whether the terminal is in the subsequent CPAC procedure is a second value, and the second value is used to indicate that the terminal is not in the subsequent CPAC procedure.

In an optional embodiment, the first variable is included in the conditional-reconfiguration variable.

In an optional embodiment, the apparatus further includes:
a third determining module, configured to determine that the value of the first variable is the first value in a case that a fifth condition is met, where the fifth condition includes at least one of the following:
an initial CPAC is performed;
an execution condition of the candidate cell is updated to a subsequent execution condition; and
the value of the first variable is configured by a network as the first value.

In an optional embodiment, the apparatus further includes:
a fourth determining module, configured to determine that the value of the first variable is the second value in a case that a sixth condition is met, where the sixth condition includes at least one of the following:
the value of the first variable is initialized to the second value;
the subsequent CPAC configuration is initially received;
no subsequent conditional reconfiguration is configured;
no key configuration is configured;
the subsequent CPAC configuration is released;
the value of the first variable is configured by a network as the second value;
no key is available;
a secondary cell group is released;
a radio resource control RRC connection is released; and
the conditional-reconfiguration variable is released.

In an optional embodiment, the apparatus further includes:
a first execution module, configured to perform a first operation in a case that an RRC reconfiguration message included in the first conditional-reconfiguration variable is applied due to conditional-reconfiguration execution, and that the first conditional-reconfiguration variable includes a subsequent CPAC configuration, where the first operation includes at least one of the following:
before an execution condition included in the first conditional-reconfiguration variable is replaced with an execution condition corresponding to the conditional-reconfiguration identifier that meets the first condition, deleting execution conditions corresponding to all conditional-reconfiguration identifiers in the first conditional-reconfiguration variable; and
after the execution condition included in the first conditional-reconfiguration variable is replaced with the execution condition corresponding to the conditional-reconfiguration identifier that meets the first condition, deleting an execution condition that is not replaced.

In an optional embodiment, if the subsequent CPAC configuration is a secondary node initiated inter-secondary-node subsequent CPAC configuration or a master node initiated inter-secondary-node subsequent CPAC configuration, the deleted execution condition is an SCG execution condition condExecutionCondSCG;
or
if the subsequent CPAC configuration is a secondary node initiated intra-secondary-node subsequent CPAC with master node involvement configuration, the deleted execution condition is an execution condition condExecutionCond.

In this embodiment of this application, in conditional-reconfiguration evaluation in the subsequent CPAC phase, an applicable candidate cell is a cell corresponding to a conditional-reconfiguration identifier included in a subsequent conditional reconfiguration of the PSCell. The method can exclude other inapplicable non-candidate cells, thereby avoiding directly evaluating all these candidate cells under the current PSCell, and further avoiding erroneous evaluation results caused by evaluating incorrect candidate cells.

It should be noted that the conditional-reconfiguration evaluation apparatus provided in this embodiment of this application is an apparatus that can perform the foregoing conditional-reconfiguration evaluation method. Therefore, all embodiments of the foregoing conditional-reconfiguration evaluation method are applicable to the apparatus, with a same or similar beneficial effect achieved. Details are not described herein again.

As shown in FIG. 5, an embodiment of this application further provides a conditional-reconfiguration apparatus, including:
a reconfiguration sending module 501, configured to send a reconfiguration message to a terminal, where the reconfiguration message includes conditional-reconfiguration information, and the conditional-reconfiguration information includes a subsequent CPAC configuration corresponding to at least one candidate cell, where
in a case that a target candidate cell is used as a primary secondary cell PSCell, a candidate cell corresponding to a conditional-reconfiguration identifier included in a subsequent CPAC configuration corresponding to the target candidate cell is an applicable candidate cell in conditional-reconfiguration evaluation.

In an optional embodiment, in a subsequent CPAC procedure, in the case that the target candidate cell is used as the primary secondary cell PSCell, the candidate cell corresponding to the conditional-reconfiguration identifier included in the subsequent CPAC configuration corresponding to the target candidate cell is the applicable candidate cell in the conditional-reconfiguration evaluation.

In an optional embodiment, the conditional-reconfiguration information further includes a first variable, and the first variable is used to indicate whether the terminal is in the subsequent CPAC procedure, where
in a case that a value of the first variable is a first value, the first value is used to indicate that the terminal is in the subsequent CPAC procedure; or
in a case that a value of the first variable is a second value, the second value is used to indicate that the terminal is not in the subsequent CPAC procedure.

It should be noted that the conditional-reconfiguration apparatus provided in this embodiment of this application is an apparatus that can perform the foregoing conditional-reconfiguration method. Therefore, all embodiments of the foregoing conditional-reconfiguration method are applicable to the apparatus, with a same or similar beneficial effect achieved. Details are not described herein again.

The conditional-reconfiguration evaluation apparatus or the conditional-reconfiguration apparatus in the embodiments of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The conditional-reconfiguration evaluation apparatus or the conditional-reconfiguration apparatus provided in the embodiments of this application can implement each process implemented in the method embodiments in FIG. 1 to FIG. 3, with the same technical effect achieved. To avoid repetition, details are not described herein again.

As shown in FIG. 6, an embodiment of this application further provides a communication device 600, including a processor 601 and a memory 602, where the memory 602 stores a program or instructions capable of running on the processor 601. For example, when the communication device 600 is a terminal, and the program or the instructions are executed by the processor 601, the steps of the foregoing embodiment of the conditional-reconfiguration evaluation method are implemented, with the same technical effect achieved. To avoid repetition, details are not described herein again. When the communication device 600 is a network-side device, and the program or the instructions are executed by the processor 601, the steps of the foregoing embodiment of the conditional-reconfiguration method are implemented, with the same technical effect achieved. To avoid repetition, details are not described herein again.

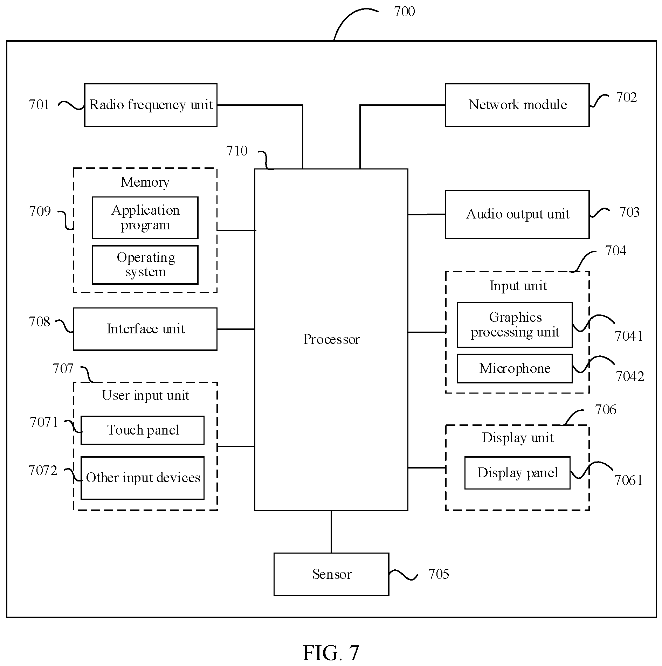

An embodiment of this application further provides a terminal, including a processor and a communication interface. The communication interface is coupled to the processor. The processor is configured to run a program or instructions to implement the steps in the method embodiment shown in FIG. 4. The terminal embodiment corresponds to the foregoing terminal-side method embodiment, and each implementation process and implementation of the foregoing method embodiment can be applied to the terminal embodiment, with the same technical effect achieved. Specifically, FIG. 7 is a schematic diagram of a hardware structure of a terminal for implementing an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 710.

The radio frequency unit 701 is configured to receive a reconfiguration message.

The processor 710 is configured to determine a cell corresponding to a conditional-reconfiguration identifier that is in a first conditional-configuration variable and that meets a first condition, as an applicable candidate cell in conditional-reconfiguration evaluation in a subsequent conditional primary secondary cell addition/change CPAC procedure, where
the first conditional-reconfiguration variable is determined based on conditional-reconfiguration information included in a reconfiguration message received by the terminal; and the first condition includes: the conditional-reconfiguration identifier is included in a subsequent CPAC configuration corresponding to a current PSCell.

In this embodiment of this application, in conditional-reconfiguration evaluation in the subsequent CPAC phase, an applicable candidate cell is a cell corresponding to a conditional-reconfiguration identifier included in a subsequent conditional reconfiguration of the PSCell. The method can exclude other inapplicable non-candidate cells, thereby avoiding directly evaluating all these candidate cells under the current PSCell, and further avoiding erroneous evaluation results caused by evaluating incorrect candidate cells.

It may be understood that for the implementation process of each implementation in this embodiment, reference may be made to the related descriptions in the method embodiment, with the same or corresponding technical effect achieved. To avoid repetition, details are not described herein again.

An embodiment of this application further provides a network-side device, including a processor and a communication interface. The communication interface is coupled to the processor. The processor is configured to run a program or instructions to implement the steps in the method embodiment shown in FIG. 5. The network-side device embodiment corresponds to the foregoing method embodiment on the network-side device, and each implementation process and implementation of the foregoing method embodiment can be applied to the network-side device embodiment, with the same technical effect achieved.

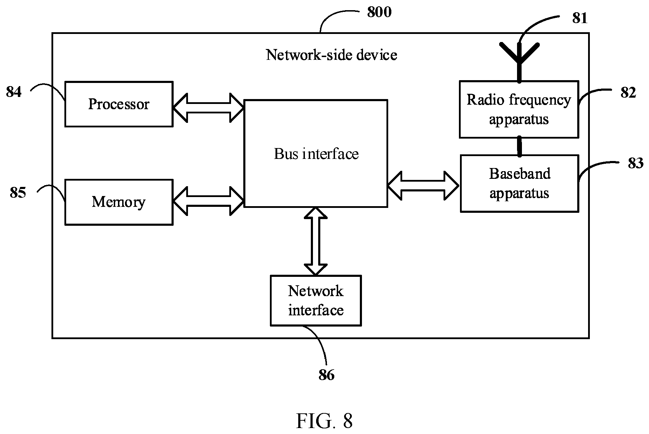

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method performed by the network-side device in the foregoing embodiment may be implemented in the baseband apparatus 83. The baseband apparatus 83 includes a baseband processor.

The baseband apparatus 83 may include, for example, at least one baseband unit, where a plurality of chips are disposed on the baseband unit. As shown in FIG. 8, one of the chips is, for example, the baseband processor, connected to the memory 85 by using a bus interface, to invoke a program in the memory 85 to perform the operation of the network device shown in the foregoing method embodiment.

The network-side device may further include a network interface 86, where the interface is, for example, a common public radio interface (Common Public Radio Interface, CPRI).

Specifically, the network-side device 800 in this embodiment of this application further includes a program or instructions stored in the memory 85 and capable of running on the processor 84. When the processor 84 invokes the program or the instructions in the memory 85, the method performed by each module shown in FIG. 5 is performed, with the same technical effect achieved. To avoid repetition, details are not described herein again.

An embodiment of this application further provides a readable storage medium. The readable storage medium stores a program or instructions. When the program or the instructions are executed by a processor, each process of the foregoing embodiment of the conditional-reconfiguration evaluation method or the conditional-reconfiguration method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

In addition, an embodiment of this application provides a chip. The chip includes a processor and a communication interface. The communication interface is coupled to the processor. The processor is configured to run a program or instructions to implement each process of the foregoing embodiment of the conditional-reconfiguration evaluation method or the conditional-reconfiguration method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the conditional-reconfiguration evaluation method or the conditional-reconfiguration method, with the same technical effect achieved. To avoid repetition, details are not described herein again.

An embodiment of this application further provides a communication system, including a terminal and a network-side device. The terminal may be configured to perform the steps of the foregoing conditional-reconfiguration evaluation method. The network-side device may be configured to perform the steps of the foregoing conditional-reconfiguration method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

Based on the foregoing descriptions of the implementations, a person skilled in the art may clearly understand that the foregoing embodiment methods can be implemented by using a computer software product in combination with a necessary general hardware platform, or by using hardware only. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners of embodiments without departing from principles of this application and the protection scope of the claims, and all such manners of embodiments fall within the protection scope of this application.

## Claims

1. A conditional-reconfiguration evaluation method, comprising:
in a subsequent conditional primary secondary cell addition/change CPAC procedure, determining, by a terminal, a cell corresponding to a conditional-reconfiguration identifier that is in a first conditional-reconfiguration variable and that meets a first condition, as an applicable candidate cell in conditional-reconfiguration evaluation, wherein
the first conditional-reconfiguration variable is determined based on conditional-reconfiguration information comprised in a reconfiguration message received by the terminal; and
the first condition comprises: the conditional-reconfiguration identifier is comprised in a subsequent CPAC configuration corresponding to a current PSCell.

2. The method according to claim 1, wherein the first conditional-reconfiguration variable meets at least one of the following conditions:
the first conditional-reconfiguration variable comprises a subsequent CPAC configuration; and
in the first conditional-reconfiguration variable, a conditional-reconfiguration entry corresponding to the current primary secondary cell PSCell comprises a subsequent CPAC configuration.

3. The method according to claim 1, wherein the method further comprises:
in an initial CPAC procedure or in a CPAC procedure in which no subsequent reconfiguration is configured, determining, by the terminal, a cell corresponding to a conditional-reconfiguration identifier that is in a second conditional-reconfiguration variable and that meets a second condition, as an applicable candidate cell in the conditional-reconfiguration evaluation, wherein the second condition comprises at least one of the following:
the conditional-reconfiguration identifier is not comprised in the subsequent CPAC configuration corresponding to the current PSCell; and
a conditional-reconfiguration variable entry corresponding to the conditional-reconfiguration identifier comprises an initial CPAC configuration.

4. The method according to claim 3, wherein the second conditional-reconfiguration variable meets at least one of the following conditions:
the second conditional-reconfiguration variable does not comprise a subsequent CPAC configuration; and
in the second conditional-reconfiguration variable, a conditional-reconfiguration entry corresponding to the current PSCell does not comprise a subsequent CPAC configuration.

5. The method according to claim 1 or 2, wherein the method further comprises:
in a case that a third condition is met, determining that the terminal is in the subsequent CPAC procedure, wherein the third condition comprises at least one of the following:
the subsequent CPAC configuration is applied;
the subsequent CPAC configuration corresponding to the current PSCell is applied; and
a value of a first variable used to indicate whether the terminal is in the subsequent CPAC procedure is a first value, and the first value is used to indicate that the terminal is in the subsequent CPAC procedure.

6. The method according to claim 3 or 4, wherein the method further comprises:
in a case that a fourth condition is met, determining that the terminal is in the initial CPAC procedure, wherein the fourth condition comprises at least one of the following:
the subsequent CPAC configuration is not applied;
the subsequent CPAC configuration corresponding to the current PSCell is not applied; and
a value of a first variable used to indicate whether the terminal is in the subsequent CPAC procedure is a second value, and the second value is used to indicate that the terminal is not in the subsequent CPAC procedure.

7. The method according to claim 5 or 6, wherein the first variable is comprised in the conditional-reconfiguration variable.

8. The method according to claim 5, wherein the method further comprises:
in a case that a fifth condition is met, determining that the value of the first variable is the first value, wherein the fifth condition comprises at least one of the following:
an initial CPAC is performed;
an execution condition of the candidate cell is updated to a subsequent execution condition; and
the value of the first variable is configured by a network as the first value.

9. The method according to claim 6, wherein the method further comprises:
in a case that a sixth condition is met, determining that the value of the first variable is the second value, wherein the sixth condition comprises at least one of the following:
the value of the first variable is initialized to the second value;
the subsequent CPAC configuration is initially received;
no subsequent conditional reconfiguration is configured;
no key configuration is configured;
the subsequent CPAC configuration is released;
the value of the first variable is configured by a network as the second value;
no key is available;
a secondary cell group is released;
a radio resource control RRC connection is released; and
the conditional-reconfiguration variable is released.

10. The method according to claim 1, wherein the method further comprises:
in a case that an RRC reconfiguration message comprised in the first conditional-reconfiguration variable is applied due to conditional-reconfiguration execution, and that the first conditional-reconfiguration variable comprises a subsequent CPAC configuration, performing, by the terminal, a first operation, wherein the first operation comprises at least one of the following:
before an execution condition comprised in the first conditional-reconfiguration variable is replaced with an execution condition corresponding to the conditional-reconfiguration identifier that meets the first condition, deleting execution conditions corresponding to all conditional-reconfiguration identifiers in the first conditional-reconfiguration variable; and
after the execution condition comprised in the first conditional-reconfiguration variable is replaced with the execution condition corresponding to the conditional-reconfiguration identifier that meets the first condition, deleting an execution condition that is not replaced.

11. The method according to claim 10, wherein
if the subsequent CPAC configuration is a secondary node initiated inter-secondary-node subsequent CPAC configuration or a master node initiated inter-secondary-node subsequent CPAC configuration, the deleted execution condition is an SCG execution condition condExecutionCondSCG;
or
if the subsequent CPAC configuration is a secondary node initiated intra-secondary-node subsequent CPAC with master node involvement configuration, the deleted execution condition is an execution condition condExecutionCond.

12. A conditional-reconfiguration method, comprising:
sending, by a network-side device, a reconfiguration message to a terminal, wherein the reconfiguration message comprises conditional-reconfiguration information, and the conditional-reconfiguration information comprises a subsequent CPAC configuration corresponding to at least one candidate cell, wherein
in a case that a target candidate cell is used as a primary secondary cell PSCell, a candidate cell corresponding to a conditional-reconfiguration identifier comprised in a subsequent CPAC configuration corresponding to the target candidate cell is an applicable candidate cell in conditional-reconfiguration evaluation.

13. The method according to claim 12, wherein
in a subsequent CPAC procedure, in the case that the target candidate cell is used as the primary secondary cell PSCell, the candidate cell corresponding to the conditional-reconfiguration identifier comprised in the subsequent CPAC configuration corresponding to the target candidate cell is the applicable candidate cell in the conditional-reconfiguration evaluation.

14. The method according to claim 12 or 13, wherein the conditional-reconfiguration information further comprises a first variable, and the first variable is used to indicate whether the terminal is in a subsequent CPAC procedure, wherein
in a case that a value of the first variable is a first value, the first value is used to indicate that the terminal is in the subsequent CPAC procedure; or
in a case that a value of the first variable is a second value, the second value is used to indicate that the terminal is not in the subsequent CPAC procedure.

15. A conditional-reconfiguration evaluation apparatus, applied to a terminal and comprising:
a first evaluation module, configured to determine a cell corresponding to a conditional-reconfiguration identifier that is in a first conditional-reconfiguration variable and that meets a first condition, as an applicable candidate cell in conditional-reconfiguration evaluation in a subsequent conditional primary secondary cell addition/change CPAC procedure, wherein
the first conditional-reconfiguration variable is determined based on conditional-reconfiguration information comprised in a reconfiguration message received by the terminal; and
the first condition comprises: the conditional-reconfiguration identifier is comprised in a subsequent CPAC configuration corresponding to a current PSCell.

16. The apparatus according to claim 15, wherein the first conditional-reconfiguration variable meets at least one of the following conditions:
the first conditional-reconfiguration variable comprises a subsequent CPAC configuration; and
in the first conditional-reconfiguration variable, a conditional-reconfiguration entry corresponding to the current primary secondary cell PSCell comprises a subsequent CPAC configuration.

17. The apparatus according to claim 15, wherein the apparatus further comprises:
a first evaluation module, configured to determine a cell corresponding to a conditional-reconfiguration identifier that is in a second conditional-reconfiguration variable and that meets a second condition, as an applicable candidate cell in the conditional-reconfiguration evaluation in an initial CPAC procedure or in a CPAC procedure in which no subsequent reconfiguration is configured, wherein the second condition comprises at least one of the following:
the conditional-reconfiguration identifier is not comprised in the subsequent CPAC configuration corresponding to the current PSCell; and
a conditional-reconfiguration variable entry corresponding to the conditional-reconfiguration identifier comprises an initial CPAC configuration.

18. The apparatus according to claim 17, wherein the second conditional-reconfiguration variable meets at least one of the following conditions:
the second conditional-reconfiguration variable does not comprise a subsequent CPAC configuration; and
in the second conditional-reconfiguration variable, a conditional-reconfiguration entry corresponding to the current PSCell does not comprise a subsequent CPAC configuration.

19. The apparatus according to claim 15 or 16, wherein the apparatus further comprises:
a first determining module, configured to determine that the terminal is in the subsequent CPAC procedure in a case that a third condition is met, wherein the third condition comprises at least one of the following:
the subsequent CPAC configuration is applied;
the subsequent CPAC configuration corresponding to the current PSCell is applied; and
a value of a first variable used to indicate whether the terminal is in the subsequent CPAC procedure is a first value, and the first value is used to indicate that the terminal is in the subsequent CPAC procedure.

20. The apparatus according to claim 17 or 18, wherein the apparatus further comprises:
a second determining module, configured to determine that the terminal is in the initial CPAC procedure in a case that a fourth condition is met, wherein the fourth condition comprises at least one of the following:
the subsequent CPAC configuration is not applied;
the subsequent CPAC configuration corresponding to the current PSCell is not applied; and
a value of a first variable used to indicate whether the terminal is in the subsequent CPAC procedure is a second value, and the second value is used to indicate that the terminal is not in the subsequent CPAC procedure.

21. The apparatus according to claim 19 or 20, wherein the first variable is comprised in the conditional-reconfiguration variable.

22. The apparatus according to claim 19, wherein the apparatus further comprises:
a third determining module, configured to determine that the value of the first variable is the first value in a case that a fifth condition is met, wherein the fifth condition comprises at least one of the following:
an initial CPAC is performed;
an execution condition of the candidate cell is updated to a subsequent execution condition; and
the value of the first variable is configured by a network as the first value.

23. The apparatus according to claim 20, wherein the apparatus further comprises:
a fourth determining module, configured to determine that the value of the first variable is the second value in a case that a sixth condition is met, wherein the sixth condition comprises at least one of the following:
the value of the first variable is initialized to the second value;
the subsequent CPAC configuration is initially received;
no subsequent conditional reconfiguration is configured;
no key configuration is configured;
the subsequent CPAC configuration is released;
the value of the first variable is configured by a network as the second value;
no key is available;
a secondary cell group is released;
a radio resource control RRC connection is released; and
the conditional-reconfiguration variable is released.

24. The apparatus according to claim 15, wherein the apparatus further comprises:
a first execution module, configured to perform a first operation in a case that an RRC reconfiguration message comprised in the first conditional-reconfiguration variable is applied due to conditional-reconfiguration execution, and that the first conditional-reconfiguration variable comprises a subsequent CPAC configuration, wherein the first operation comprises at least one of the following:
before an execution condition comprised in the first conditional-reconfiguration variable is replaced with an execution condition corresponding to the conditional-reconfiguration identifier that meets the first condition, deleting execution conditions corresponding to all conditional-reconfiguration identifiers in the first conditional-reconfiguration variable; and
after the execution condition comprised in the first conditional-reconfiguration variable is replaced with the execution condition corresponding to the conditional-reconfiguration identifier that meets the first condition, deleting an execution condition that is not replaced.

25. The apparatus according to claim 24, wherein
if the subsequent CPAC configuration is a secondary node initiated inter-secondary-node subsequent CPAC configuration or a master node initiated inter-secondary-node subsequent CPAC configuration, the deleted execution condition is an SCG execution condition condExecutionCondSCG;
or
if the subsequent CPAC configuration is a secondary node initiated intra-secondary-node subsequent CPAC with master node involvement configuration, the deleted execution condition is an execution condition condExecutionCond.

26. A terminal, comprising a processor and a memory, wherein the memory stores a program or instructions capable of running on the processor, and when the program or the instructions are executed by the processor, the steps of the conditional-reconfiguration evaluation method according to any one of claims 1 to 11 are implemented.

27. A conditional-reconfiguration apparatus, comprising:
a reconfiguration sending module, configured to send a reconfiguration message to a terminal, wherein the reconfiguration message comprises conditional-reconfiguration information, and the conditional-reconfiguration information comprises a subsequent CPAC configuration corresponding to at least one candidate cell, wherein
in a case that a target candidate cell is used as a primary secondary cell PSCell, a candidate cell corresponding to a conditional-reconfiguration identifier comprised in a subsequent CPAC configuration corresponding to the target candidate cell is an applicable candidate cell in conditional-reconfiguration evaluation.

28. The apparatus according to claim 27, wherein
in a subsequent CPAC procedure, in the case that the target candidate cell is used as the primary secondary cell PSCell, the candidate cell corresponding to the conditional-reconfiguration identifier comprised in the subsequent CPAC configuration corresponding to the target candidate cell is the applicable candidate cell in the conditional-reconfiguration evaluation.

29. The apparatus according to claim 27 or 28, wherein the conditional-reconfiguration information further comprises a first variable, and the first variable is used to indicate whether the terminal is in a subsequent CPAC procedure, wherein
in a case that a value of the first variable is a first value, the first value is used to indicate that the terminal is in the subsequent CPAC procedure; or
in a case that a value of the first variable is a second value, the second value is used to indicate that the terminal is not in the subsequent CPAC procedure.

30. A network-side device, comprising a processor and a memory, wherein the memory stores a program or instructions capable of running on the processor, and when the program or the instructions are executed by the processor, the steps of the conditional-reconfiguration method according to any one of claims 12 to 14 are implemented.

31. A terminal, comprising a processor and a communication interface, wherein the communication interface is configured to receive a reconfiguration message, and the processor is configured to determine a cell corresponding to a conditional-reconfiguration identifier that is in a first conditional-configuration variable and that meets a first condition, as an applicable candidate cell in conditional-reconfiguration evaluation in a subsequent conditional primary secondary cell addition/change CPAC procedure, wherein the first conditional-reconfiguration variable is determined based on conditional-reconfiguration information comprised in the reconfiguration message received by the terminal; and the first condition comprises: the conditional-reconfiguration identifier is comprised in a subsequent CPAC configuration corresponding to a current PSCell.

32. A network-side device, comprising a processor and a communication interface, wherein the communication interface is configured to send a reconfiguration message to a terminal, wherein the reconfiguration message comprises conditional-reconfiguration information, and the conditional-reconfiguration information comprises a subsequent CPAC configuration corresponding to at least one candidate cell, wherein
in a case that a target candidate cell is used as a primary secondary cell PSCell, a candidate cell corresponding to a conditional-reconfiguration identifier comprised in a subsequent CPAC configuration corresponding to the target candidate cell is an applicable candidate cell in conditional-reconfiguration evaluation.

33. A readable storage medium, wherein the readable storage medium stores a program or instructions, and when the program or the instructions are executed by a processor, the steps of the conditional-reconfiguration evaluation method according to any one of claims 1 to 11 are implemented; or when the program or the instructions are executed by a processor, the steps of the conditional-reconfiguration method according to any one of claims 12 to 14 are implemented.

34. A wireless communication system, comprising a terminal and a network-side device, wherein the terminal is configured to perform the steps of the conditional-reconfiguration evaluation method according to any one of claims 1 to 11, and the network-side device is configured to perform the steps of the conditional-reconfiguration method according to any one of claims 12 to 14.

35. A chip, wherein the chip comprises a processor and a communication interface, the communication interface is coupled to the processor, and the processor is configured to run a program or instructions to implement the steps of the conditional-reconfiguration evaluation method according to any one of claims 1 to 11 or implement the steps of the conditional-reconfiguration method according to any one of claims 12 to 14.

36. A computer program, wherein the computer program is stored in a storage medium, and the program is executed by at least one processor to implement the steps of the conditional-reconfiguration evaluation method according to any one of claims 1 to 11 or implement the steps of the conditional-reconfiguration method according to any one of claims 12 to 14.

37. A computer program product, wherein the computer program product is stored in a storage medium, and the program product is executed by at least one processor to implement the steps of the conditional-reconfiguration evaluation method according to any one of claims 1 to 11 or implement the steps of the conditional-reconfiguration method according to any one of claims 12 to 14.
